# EUROPÄISCHE PATENTSCHRIFT

(11) **EP 4 581 328 B1**
(45) Veröffentlichungstag und Bekanntmachung des Hinweises auf die Patenterteilung: **05.08.2026**
(21) Anmeldenummer: 23764618.7
(22) Anmeldetag: 31.08.2023
(51) Int. Cl.: F41H 11/136, G01S 13/86, G01S 13/88

(54) **DETEKTIONSVORRICHTUNG ZUM DETEKTIEREN EINES EXPLOSIONSFÄHIGEN ZIELOBJEKTS IM BODEN**
DETECTION DEVICE FOR DETECTING AN EXPLOSIVE TARGET OBJECT IN THE GROUND
DISPOSITIF DE DÉTECTION POUR DÉTECTER UN OBJET CIBLE EXPLOSIF DANS LE SOL

(30) Priorität: 01.09.2022 CH 10232022
(43) Veröffentlichungstag der Anmeldung: 09.07.2025
(73) Patentinhaber: Global Clearance Solutions AG, 8807 Freienbach (CH)
(72) Erfinder: GRASER, Dominic, 78532 Tuttlingen (DE); FISCHER, Hagen, 9562 Märwil (CH)
(74) Vertreter: Frei Patent Attorneys
(86) Internationale Anmeldenummer: PCT/EP2023/073923
(87) Internationale Veröffentlichungsnummer: WO 2024/047173

(56) Entgegenhaltungen:
- EP-A1- 1 972 964
- EP-B1- 2 616 837
- US-A1- 2009 295 391
- US-A1- 2016 097 879
- US-A1- 2021 141 118

## Beschreibung

Die Erfindung bezieht sich auf das Gebiet einer Detektion von explosionsfähigen Objekten im Boden.

Derartige Vorrichtungen und Verfahren sind bereits in verschiedenen Varianten bekannt und werden weltweit eingesetzt, beispielsweise im Bereich von Kampfmittelbeseitigung. Bei einer Räumung eines Bodens von explosionsfähigen Objekten wird bereits eine Vielzahl von bekannten Vorrichtungen und Verfahren angewendet. Aus Sicherheitsgründen wird dabei eine kontaktlose Detektion bevorzugt. Bei explosionsfähigen Objekten kann es sich dabei um Minen, Sprengfallen, Sprengstoff, Sprengladungen, Streumunition, Munition und Blindgänger handeln. Aber auch unkonventionelle Kampfmittel ("Improvised Explosive Devices", kurz IED), wie sie etwa von terroristischen Gruppen verwendet werden, können von explosionsfähigen Objekten umfasst sein. Verschiedene bekannte Vorrichtungen benutzen unterschiedliche Messmethoden zur Detektion, wobei die Messmethoden jeweils eigene Vor- und Nachteile aufweisen.

Bekannte Detektionsvorrichtungen umfassen beispielsweise elektromagnetische Aktivsuchgeräte, also eine Elektromagnetikmessmethode. Dabei wird durch elektromagnetische Induktion in einer stromdurchflossenen Spule ein Magnetfeld erzeugt, durch welches wiederum in einem metallischen Zielobjekt ein Wirbelstrom entsteht. Und dieser Wirbelstrom erzeugt ein eigenes magnetisches Feld, welches dem erregenden Magnetfeld entgegengesetzt ist und dieses abschwächt. Diese Abschwächung kann genutzt werden, um ein Vorhandensein von metallischen Objekten zu detektieren. Dabei können sowohl ferroelektrische als auch nichtferroelektrische Metalle detektiert werden. Nachteil einer Elektromagnetikmessmethode ist eine ausschliessliche Detektion von Metallteilen, und dies noch abhängig von der Leitfähigkeit und Permeabilität der Metallsorte. Sobald ein Zielobjekt wenig Metall und/oder eine Metallsorte mit geringer Wirbelstromfähigkeit aufweist, erfolgt nur eine entsprechend geringe Abschwächung des magnetischen Feldes. Die Elektromagnetikmessmethode kann zudem nur Objekte in einer begrenzten Tiefe im Boden detektieren. Aus diesem Grund wird sie häufig nur für eine Suche nach Objekten nahe der Bodenoberfläche verwendet. Zudem bewirkt jede Beeinflussung der elektromagnetischen Strahlung im Messbereich eine Störung der Messsignale der Elektromagnetikmessmethode. Eine Kombination mit anderen Messmethoden, welche elektromagnetische Strahlung beeinflussen, ist somit aufwändig und kompliziert.

Andere bekannte Detektionsvorrichtungen umfassen beispielsweise eine Magnetfeldmessmethode. Mit einem Magnetometer erfolgt dabei eine Messung eines Magnetfelds. Die Magnetfeldmessmethode erlaubt eine direkte Detektion von ferromagnetischen Metallteilen (also nicht von Nichteisenmetallen bzw. nichtferromagnetischen Metallen wie etwa Aluminium), und dies abhängig von der Leitfähigkeit und Permeabilität der Metallsorte, was die Anwendung der Magnetfeldmessmethode entsprechend einschränkt.. Eine Magnetfeldmessmethode eignet sich beispielsweise gut, um ferromagnetische Metallobjekte in grossen Tiefen von bis zu 6 Meter zu detektieren. Darüber hinaus kann die Magnetfeldmessmethode bei der Anwendung eine natürliche magnetische Signatur des Bodens messen, und entsprechend auch eine Änderung derselben, welche beispielsweise durch graben oder einen Objekteinschlag erfolgt ist. Eine korrekte Interpretation der Messsignale der Magnetfeldmessmethode ist nicht immer einfach. Und übliche Magnetfeldmessanordnungen wie Protonenmagnetometer, Cäsium-Magnetometer oder einfache Hall-Sensoren haben den Nachteil, dass sie teilweise aufwändige und/oder komplexe Randbedingungen mit sich bringen, wie etwa dass sie eine starke Kühlung der Sensoren bedingen und/oder eine grosse Baugrösse aufweisen. Dies ist bei einer Verwendung im Gelände und hinsichtlich der Transportierbarkeit von Nachteil. Zudem reagiert eine Magnetfeldmessmethode naturgemäss empfindlich auf Veränderungen der Magnetfelds, also auch auf nicht vom Zielobjekt verursachte Veränderungen beispielsweise durch (insbesondere ferromagnetische) Objekte in der Umgebung der Detektionsvorrichtung. Eine Kombination mit Messmethoden, welche das Magnetfeld im Messbereich beeinflussen (wie etwa durch Ausstrahlung elektromagnetischer Strahlung wie bei der Elektromagnetikmessmethode), ist somit aufwändig und kompliziert

Wiederum andere Detektionsvorrichtungen umfassen einen Bodenradar. In einem Bodenradar werden elektromagnetische Wellen ausgesendet, welche vom Zielobjekt reflektiert und dann wieder vom Bodenradar empfangen und ausgewertet werden. Auf diese Weise können alle Unterschiede einer Beschaffenheit des Bodens detektiert werden. Beispielsweise Anomalien wie die gesuchten explosionsfähigen Objekte, aber auch Steine und andere natürliche und unnatürliche Inhomogenitäten des Bodens, welche aber nicht gesucht sind. Dafür können auch nichtmetallische Objekte oder Objekte mit geringem Metallgehalt (wie z.B. IDEs) gut detektiert werden. Aber je tiefer im Boden mit dem Bodenradar gemessen werden soll, desto tiefer muss die Messfrequenz werden, und dadurch wird die Messung räumlich schlechter aufgelöst und somit ungenauer. Der Bodenradar reagiert sensibel auf Veränderungen von elektromagnetischen Wellen und deren Reflektionsverhalten im Messbereich, wodurch die Messung verfälscht werden kann. Ein Bodenradar ist dadurch empfindlich hinsichtlich aller Quellen von elektromagnetischer Strahlung, insbesondere von Strahlenquellen wie sie etwa bei der Elektromagnetikmessmethode verwendet werden. Eine Kombination mit anderen Messmethoden, welche elektromagnetische Strahlung beeinflussen, ist somit aufwändig und kompliziert.

Auch andere Messmethoden werden in bekannten Vorrichtungen zum Zweck der Detektion von explosionsfähigen Objekten verwendet. Je nach Anwendungszweck wird also eine andere Messmethode verwendet, mit den entsprechenden Vor- und Nachteilen. Es werden manchmal auch mehrere verschiedene Vorrichtungen, welche unterschiedliche Messmethoden verwenden, nacheinander zur Detektion eingesetzt. Dies ist aber mühsam und ineffizient sowie gefährlich, wenn beispielsweise ein explosionsfähiges Objekt zwar mit einer der verwendeten Vorrichtungen detektierbar ist, aber zuerst eine andere Vorrichtung eingesetzt wird, welche dieses explosionsfähige Objekt schlecht oder gar nicht detektiert, und ein Einsatz dieser Vorrichtung beispielsweise mechanisch eine Explosion des Objekts herbeiführen könnte.

Es existieren bereits auch Vorrichtungen, welche eine der Messmethoden mit einer zweiten in einem einzigen Gerät kombinieren. Beispielsweise ist in EP2616837 eine Detektionsvorrichtung beschrieben, welche gleichzeitig einen Bodenradar und einen Metalldetektor verwendend eine Elektromagnetikmessmethode umfasst. Dabei ist eine spezifische räumliche Anordnung des Metalldetektors und des Bodenradars nötig (Metalldetektor senkrecht in der Bodenradarstruktur), um diese Kombination von Messmethoden für denselben Messbereich zu ermöglichen, ohne die jeweiligen Messsignale übermässig zu stören. Eine Kombination von mehreren Messmethoden ist schwierig zu bewerkstelligen, ohne dass sich diese gegenseitig beeinflussen und stören. Detektionsvorrichtungen des Standes der Technik sind durch US 2009/295391 A1, EP 1 972 964 A1 und US 2016/097879 A1 offenbart.

Es ist deshalb Aufgabe der Erfindung, eine Detektionsvorrichtung der eingangs genannten Art zu schaffen, welche mindestens einen der oben genannten Nachteile mindestens teilweise behebt.

Diese Aufgabe löst eine Detektionsvorrichtung mit den Merkmalen des entsprechenden unabhängigen Patentanspruchs. Vorteilhafte Ausführungen können den abhängigen Ansprüchen, der Beschreibung und/oder den Figuren entnommen werden.

Die erfindungsgemässe Detektionsvorrichtung dient einem Detektieren eines explosionsfähigen Zielobjekts, welches bis maximal 6 m unter einer Bodenfläche angeordnet ist. Die Detektionsvorrichtung umfasst eine erste Messvorrichtung für eine Magnetfeldmessmethode mit mindestens einem Gradiometer, eine zweite Messvorrichtung für eine Elektromagnetikmessmethode aus dem Bereich time-domain-Verfahren, eine dritte Messvorrichtung für eine Bodenradarmethode, und eine Auswertungsvorrichtung. Dabei ist eine Messfläche von jeder Messvorrichtung mindestens benachbart zu mindestens einer Messfläche einer der beiden anderen Messvorrichtung angeordnet. Die Auswertungsvorrichtung ist imstande, Signale der ersten, zweiten und dritten Messvorrichtung zu empfangen und jeweils in Echtzeit auszuwerten. Und die Auswertungsvorrichtung ist imstande, aus einer Kombination der ausgewerteten Signale der ersten, zweiten und dritten Messvorrichtung eine Lageinformation des Zielobjekts unterhalb einer Detektionsfläche, welche in den Messflächen aller dreier Messvorrichtungen gelegen hat, zur Verfügung zu stellen.

Die erfindungsgemässe Detektionsvorrichtung kombiniert Messvorrichtungen einer Magnetfeldmessmethode, einer Elektromagnetikmessmethode und einer Bodenradarmethode. Da sich im Allgemeinen die Messmethoden von Magnetfeldmessung, Elektromagnetikmessung und Bodenradar prinzipiell grundsätzlich gegenseitig beeinflussen und stören können, ist bei der erfindungsgemässen Detektionsvorrichtung eine bewusste Wahl von spezifischen Unterarten der Messmethoden getroffen worden, um eine Kombination dieser Messmethoden zu erlauben: die Magnetfeldmessmethode umfasst mindestens einen Gradiometer, und die verwendete Elektromagnetikmessmethode stammt aus dem Bereich der time-domain-Verfahren.

Ein Gradiometer nutzt zwei separate Magnetfeldsensoren. Dabei misst ein Sensor die Umgebung, und durch eine Ermittlung einer Differenz zum zweiten Sensor kann eine von der Umgebung bereinigte Messung erfolgen. Auf diese Weise kann die Magnetfeldmessmethode aufgrund des Gradiometers bei gezielt gewählter räumlicher Anordnung und zeitlicher Steuerung des Gradiometers mit anderen Messmethoden kombiniert werden, die beispielsweise elektromagnetische Strahlung aussenden. Anders ausgedrückt: durch eine spezifische Ausrichtung der beiden separaten Magnetfeldsensoren des Gradiometers zueinander beeinflussen nicht vom Zielobjekt hervorgerufene Änderungen des Magnetfelds, beispielsweise durch elektromagnetische Strahlung oder durch Lageänderungen der gesamten Detektionsvorrichtung, beide Magnetfeldsensoren in gleichem Umfang. Beim Ermitteln einer Differenz zwischen beiden Magnetfeldsensoren fällt somit deren Einfluss weg, und die Magnetfeldmessmethode nimmt die Signale vom Zielobjekt unabhängig von anderen Änderungen des Magnetfelds auf. Aus diesem Grund kann die Magnetfeldmessmethode mit mindestens einem Gradiometer bei spezifischer Ausrichtung des Gradiometers in der erfindungsgemässen Detektionsvorrichtung kombiniert werden mit einer spezifisch ausgewählten Elektromagnetikmessmethode und der Bodenradarmethode.

Zudem können im Gradiometer aufgrund der Differenzmessung kompakte und einfache Magnetfeldsensoren verwendet werden, welche dennoch zu Messignalen von für den vorliegenden Zweck ausreichender Qualität führen. Beispielsweise werden dazu Fluxgate-Sensoren verwendet.

Mit dem Gradiometer können ferromagnetische Objekte abhängig von Metallsorte, Metallgehalt und Objektgrösse in Bodentiefen von bis zu 6 m detektiert werden. Das Gradiometer eignet sich somit gut für eine Detektion von explosionsfähigen Objekten in relativ grossen Bodentiefen. Mit dem Gradiometer können bei entsprechender Auswertung sogar Änderungen einer natürlichen magnetischen Signatur des Bodens gemessen werden, also beispielsweise Spuren von Grabungen oder von einem Objekteinschlag, was auf verborgene explosionsfähige Objekte hindeuten kann.

Mit der Bezeichnung unter der Bodenfläche oder mit der Bezeichnung Tiefe oder tief sind Distanzen in Gravitationsrichtung gemeint. Als Boden wird ein Teil der Erdoberfläche, insbesondere eines Erdbodens bezeichnet.

Die Elektromagnetikmessmethode aus dem Bereich time-domain-Verfahren nutzt eine hochfrequente Folge von starken Impulsen, welche im Zielobjekt durch die induzierten Wirbelströme einen raschen Aufbau eines starken Magnetfelds bewirken. Einerseits kann durch diese Folge von Impulsen eine zeitliche Trennung einer Sendephase und einer davon verschiedenen Empfangsphase erreicht werden. Dies erlaubt den Einsatz von hohen Sendeleistungen, was eine hohe Eindringtiefe in den Boden ermöglicht. Zudem eignet sich die Elektromagnetikmessmethode aus dem Bereich time-domain-Verfahren gut für eine spezifisch angepasste Form einer Empfangsspule, welche von einer Sendespule separat ausgebildet ist. Durch eine gezielte Wahl von Form und Anordnung der Empfangsspule sowie der Sendespule kann die Elektromagnetikmessmethode aus dem Bereich time-domain-Verfahren somit gut mit anderen Messmethoden, welche elektromagnetische Signale verwenden, kombiniert werden. Aus den vorgenannten Gründen kann die Elektromagnetikmessmethode aus dem Bereich time-domain-Verfahren in der erfindungsgemässen Detektionsvorrichtung kombiniert werden mit einer spezifischen Magnetfeldmessmethode und der Bodenradarmethode.

Die Elektromagnetikmessmethode aus dem Bereich time-domain-Verfahren kann alle Metallsorten detektieren, weist aber eine relativ geringe Eindringtiefe in den Boden auf. Typischerweise werden mit dieser Methode Objekte bis zu einer Tiefe von maximal 1 m im Boden detektiert. Somit eignet sich diese Methode zur Detektion von explosionsfähigen Objekte mit einem Anteil aus beliebigem Metall, welche nahe einer Bodenoberfläche angeordnet sind.

Der Bodenradar kann alle Bodenanomalien detektieren und eignet sich zur Detektion von explosionsfähigen Objekten mit geringem Metallanteil, oder gar ohne Metallanteil. Eine korrekte Auswertung von Signalen der Messvorrichtung des Bodenradars hingegen ist wichtig, um natürliche Bodenanomalien wie Steine, unterschiedliche Bodenschichten, Bodenverwerfungen, Wasseransammlungen, Pflanzenteile wie Wurzeln etc. von den gesuchten explosionsfähigen Objekten zu unterscheiden.

Durch eine Kombination der Messignale dieser drei Messmethoden kann eine grosse Anzahl von unterschiedlichen explosionsfähigen Objekten detektiert werden. Dabei ergibt sich aus der Kombination dieser Messignale eine Information, welche über eine Summe von einzelnen Messergebnissen hinausgeht: je nach dem, wie stark und was jeweils von einer einzelnen Messmethode als ausgewertetes Signal vorliegt, kann in Kombination besser ein potentielles explosionsfähiges Objekt detektiert werden, als wenn die Messmethoden isoliert für sich angewendet und ausgewertet werden. Ein positives Detektionssignal einer Messmethode bei gleichzeitigem Ausbleiben eines Detektionssignals einer anderen Messmethode führt in Kombination aller drei Messmethoden zu guten Detektionsergebnissen für verschiedene Arten von explosionsfähigen Objekten in verschiedenen Tiefen unter dem Boden.

Die erfindungsgemässe Vorrichtung kann dadurch explosionsfähige Objekte dreier Hauptkategorien von explosionsfähigen Objekten detektieren: ferromagnetische Objekte (z.B. Stahlobjekte, Geschosse, Bomben, Improvisierte Sprengfallen mit Splittermantel), nichtferromagnetische oder schwach ferromagnetische Objekte (z.B. Objekte umfassend Aluminium, Sprengkapseln, Zünder von Geschossen oder Minen) und metallfreie Objekte (z.B. Kanister gefüllt einem Sprengstoffgemisch, sogenannte HME = home made explosive).

Beispielsweise kann die Kombination der ausgewerteten Signale von allen drei Messmethoden für die Detektionsfläche stark vereinfacht ausgedrückt, und ohne auf eine spezifische und angepasste Auswertungsmethode einzugehen, folgendes ergeben: das Gradiometer detektiert nichts, die Elektromagnetikmessmethode aus dem Bereich time-domain-Verfahren detektiert ein schwaches Signal an, der Bodenradar detektiert ein Objekt. Daraus lässt sich eine hohe Wahrscheinlichkeit für einen Kanister mit einer Sprengkapsel schliessen, welcher nur wenig unterhalb der Detektionsfläche angeordnet ist. Oder das Gradiometer detektiert ein Objekt, die Elektromagnetikmessmethode aus dem Bereich time-domain-Verfahren detektiert nichts, und der Bodenradar detektiert ebenfalls nichts. Daraus lässt sich schliessen, dass ein metallisches Objekt in grosser Tiefe vorliegt, beispielsweise ein nicht detoniertes Artilleriegeschoss 6 m tief unter der Detektionsfläche. Oder das Gradiometer detektiert eine leichte Änderung der natürlichen Bodenstruktur, die Elektromagnetikmessmethode aus dem Bereich time-domain-Verfahren detektiert nichts, und der Bodenradar detektiert ein grösseres Objekt nahe unter der Detektionsfläche. Daraus lässt sich schliessen, dass ein metallfreies explosionsfähiges Objekt vorliegen könnte, beispielsweise ein vergrabener Kanister gefüllt mit explosionsfähigem Material, wobei eine Sprengschnur vom Kanister abzweigt.

Darüber hinaus weist die erfindungsgemässe Detektionsvorrichtung eine bestimmte Anordnung von Messbereichen der drei Messvorrichtungen auf. Der Messbereich einer Messvorrichtung ist ein dreidimensionaler Raum, welcher von der Messvorrichtung vermessen wird. Anders ausgedrückt kann im Messbereich durch die Messvorrichtung eine Detektion erfolgen, ausserhalb des Messbereichs nicht. Ein Teil der Bodenoberfläche, welcher vom Messbereich erfasst ist, wird als Messfläche bezeichnet. Die Messfläche ist also eine Schnittmenge von Messbereich und Bodenoberfläche.

Die Messfläche jeder Messvorrichtung ist mindestens benachbart zu mindestens einer Messfläche einer der beiden anderen Messvorrichtung angeordnet. Die Messflächen von zwei Messvorrichtungen der Detektionsvorrichtung sind dann mindestens benachbart angeordnet, wenn sie an einer Stelle, wo die Messflächen sich am nächsten sind, einen Messflächenabstand von maximal 0.5 m aufweisen, wobei auch direkt aneinander angrenzende oder teilweise überlappende Messflächen als mindestens benachbart angeordnet bezeichnet werden. Anders ausgedrückt wird eine Messfläche dann mindestens benachbart zu einer anderen Messfläche bezeichnet, wenn beide Messflächen teilweise überlappen oder beide Messflächen direkt aneinander angrenzen oder ein geringster Abstand zwischen den zwei Messflächen einen Messflächenabstand von maximal 0.5 m beträgt. Der Messflächenabstand kann auch maximal 0.3 m betragen. Insbesondere beträgt der Messflächenabstand maximal 0.1 m.

Anders ausgedrückt sind die Messbereiche der drei Messvorrichtungen im Bereich der Bodenoberfläche mindestens benachbart angeordnet.

Durch diese mindestens benachbarte Anordnung der Messflächen der unterschiedlichen Messvorrichtungen ist es möglich, die verschiedenen Messmethoden in einer gemeinsamen Detektionsvorrichtung zu kombinieren, ohne dass die gegenseitige Beeinflussung zu wesentlichen Problemen führt. Beispielsweise verschlechtert sich eine Auflösung der Elektromagnetikmessmethode, wenn deren Messfläche dieselbe ist wie diejenige der Bodenradarmethode.

Die Detektionsfläche ist ein Teil der Bodenfläche, welcher in den Messflächen aller dreier Messvorrichtungen der Detektionsvorrichtung gelegen hat. Anders ausgedrückt stehen für die Detektionsfläche Messignale aller dreier Messvorrichtungen zur Verfügung. Die Detektionsfläche wurde von allen drei Messvorrichtungen vermessen und ist ein Teil der Bodenfläche.

Aufgrund der mindestens benachbart angeordneten Messflächen der drei Messvorrichtungen sind in der Regel Messungen mit den Messflächen an verschiedenen Positionen nötig, um eine relevant grosse Detektionsfläche zu erzielen. Da die Detektionsvorrichtung typischerweise für die Detektionen von explosionsfähigen Objekten in grösseren Bodenflächen wie beispielsweise Wegen, Feldern, Grenzzonen, oder Teilen von Kriegsgebieten verwendet wird, ist eine Positionsänderung der Detektionsvorrichtung bzw. seiner Messflächen üblich. Durch mehrere Messungen mit den Messflächen an verschiedenen räumlichen Positionen ergibt sich in Kombination aller Messungen eine Detektionsfläche, welche von allen drei Messvorrichtungen erfasst wurde.

Die Auswertungsvorrichtung der Detektionsvorrichtung empfängt Signale aller dreier Messvorrichtungen und wertet diese in Echtzeit aus. Dabei ordnet die Auswertungsvorrichtung den Signalen jeder Messvorrichtung eine räumliche Position der entsprechenden Messfläche der jeweiligen Messvorrichtung zu. Dies erlaubt es der Auswertungsvorrichtung, eine Detektionsfläche zu ermitteln, in welcher Signale aller dreier Messvorrichtungen vorliegen. Und für die Detektionsfläche kann die Auswertungsvorrichtung somit eine Lageinformation eines detektierten Zielobjekts zur Verfügung stellen, indem die Auswertungsvorrichtung die ausgewerteten Signale aller dreier Messvorrichtungen der Detektionsvorrichtung innerhalb der Detektionsfläche miteinander kombiniert.

Die Lageinformation des Zielobjekts ist eine Information darüber, ob die Detektionsvorrichtung ein explosionsfähiges Zielobjekt detektiert hat oder nicht, sowie eine räumliche Positionsangabe zum Zielobjekt, sofern eines detektiert wurde. Die Lageinformation umfasst also eine Information, unter welcher Stelle der Detektionsfläche das Zielobjekt liegt oder ob kein Zielobjekt detektiert wurde. Insbesondere kann die Lageinformation eine Information umfassen, in welcher Tiefe unterhalb der detektierten Stelle das Zielobjekt angeordnet ist.

Die Lageinformation, dass unterhalb der Detektionsfläche kein Zielobjekt detektiert wurde, weist darauf hin, dass unterhalb der Detektionsfläche mit keinem explosionsfähigen Zielobjekt zu rechnen ist. In diesem Fall kann für dieses Detektionsfläche eine entsprechende Entwarnung gegeben werden. Und eine Lageinformation mit einer Positionsangabe eines Zielobjekts zeigt an, an welcher Position auf der Detektionsfläche (und optional in welcher Tiefe darunter) mit einem explosionsfähigen Zielobjekt zu rechnen ist. Entsprechende Schritte können dann eingeleitet werden (z.B. entschärfen, bergen, sprengen des Zielobjekts und/oder eine Absperrung der gefährlichen Bodenfläche). Sowohl eine Nichtdetektion eines Zielobjekts als auch eine Detektion eines Zielobjekts sowie dessen räumliche Position sind wichtige Lageinformationen.

Optional umfasst die Detektionsvorrichtung eine Anzeigevorrichtung, welche die von der Auswertungsvorrichtung zur Verfügung gestellte Lageinformation des Zielobjekts graphisch darzustellen imstande ist.

Durch die Anzeigevorrichtung kann die Lageinformation rasch und einfach verständlich dargestellt werden. Dies vereinfacht eine Anwendung der Detektionsvorrichtung und macht die Anwendung intuitiv. Eine korrekte Bedienung der Detektionsvorrichtung wird erleichtert, und eine Fehlbedienung wird unwahrscheinlich. Beispielsweise kann die Detektionsvorrichtung auch die Detektionsfläche anzeigen.

Alternativ oder zusätzlich kann die von der Auswertungsvorrichtung zur Verfügung gestellte Lageinformation des Zielobjekts durch eine Anzeigevorrichtung oder dergleichen dargestellt werden, welche nicht von der Detektionsvorrichtung umfasst ist. Analog gilt dies für die Detektionsfläche.

Insbesondere dient die Detektionsvorrichtung dem Detektieren eines explosionsfähigen Zielobjekts, welches bis maximal 3 m tief unter der Bodenfläche angeordnet ist. Beispielsweise dient die Detektionsvorrichtung dem Detektieren eines explosionsfähigen Zielobjekts, welches bis maximal 1 m tief unter der Bodenfläche angeordnet ist.

Insbesondere sind die erste, zweite und dritte Messvorrichtung auf einer gemeinsamen transportfähigen Plattform angeordnet.

Die gemeinsame transportfähige Plattform für die drei Messvorrichtungen hat den Vorteil, dass die entsprechenden Messflächen einfach und effizient von einer Position zu einer anderen Position bewegt werden können. Die gemeinsame transportfähige Plattform erlaubt eine stabile Befestigung der drei Messvorrichtungen relativ zueinander, was sich positiv auf die gegenseitige Beeinflussung der unterschiedlichen Messmethoden auswirken kann.

Beispielsweise wird die Detektionsvorrichtung für eine Kampfmittelbeseitigung verwendet. Die Kampfmittelbeseitigung kann dabei militärischer und/oder ziviler Natur sein.

Weitere Ausführungsformen gehen aus den abhängigen Patentansprüchen hervor.

Optional umfasst die Detektionsvorrichtung eine Steuervorrichtung, welche eine zeitliche Abfolge von Messungen der ersten und der zweiten Messvorrichtung festlegt.

Insbesondere gibt die Steuervorrichtung einen Haupttakt für Messzyklen von 1 Hz bis 10 kHz vor. Beispielsweise gibt die Steuervorrichtung einen Haupttakt für Messzyklen von 10 Hz bis 5 kHz vor. Die Steuervorrichtung kann auch einen Haupttakt für Messzyklen von 100 Hz bis 1 kHz vorgeben.

Die Steuervorrichtung erlaubt es, innerhalb eines Messzyklus Messvorgänge der ersten und zweiten Messvorrichtung gezielt in unterschiedliche Zeitfenster zu legen, um eine geringe negative gegenseitige Beeinflussung zu ermöglichen. Anders ausgedrückt können mit der Steuervorrichtung Messvorgänge der ersten und der zweiten Messvorrichtung gezielt derart zeitlich gestaffelt werden, dass eine gegenseitige Störung der Messungen der Messvorrichtungen gering gehalten werden kann.

Beispielsweise umfasst ein Messzyklus die folgende Abfolge von Messvorgängen: Sendephase der zweiten Messvorrichtung (der Elektromagnetikmessmethode), Empfangsphase der zweiten Messvorrichtung, Abklingphase von Sende- und Empfangsspulen der zweiten Messvorrichtung, Empfangsphase der ersten Messvorrichtung (der Magnetfeldmessmethode).

Alternativ kann die Detektionsvorrichtung frei von einer Steuervorrichtung ausgebildet sein.

Optional ist in der Detektionsvorrichtung die dritte Messvorrichtung für die Bodenradarmethode räumlich zwischen der ersten Messvorrichtung für die Magnetfeldmessmethode und der zweiten Messvorrichtung für die Elektromagnetikmessmethode angeordnet. Insbesondere ist die erste Messvorrichtung von der zweiten Messvorrichtung in einem Abstand von mindestens 0.5 m angeordnet.

Eine räumliche Anordnung der dritten Messvorrichtung zwischen der ersten und der zweiten Messvorrichtung erlaubt es, eine gegenseitige Beeinflussung der ersten und zweiten Messvorrichtung durch die räumliche Entfernung voneinander gering zu halten. Dabei erlaubt diese räumliche Anordnung der drei Messvorrichtungen eine kompakte Ausbildung der Detektionsvorrichtung bzw. dessen Teils umfassend die Messvorrichtungen.

Beispielsweise kann die erste Messvorrichtung von der zweiten Messvorrichtung in einem Abstand von mindestens 0.7 m angeordnet sein. Die erste Messvorrichtung kann von der zweiten Messvorrichtung auch in einem Abstand von mindestens 0.9 m angeordnet sein.

Optional wird die dritte Messvorrichtung für die Bodenradarmethode mindestens teilweise von einem metallhaltigen Schirmgehäuse umfasst, welche die dritte Messvorrichtung von der ersten Messvorrichtung und von der zweiten Messvorrichtung räumlich trennt und elektromagnetisch mindestens teilweise abschirmt.

Durch das metallhaltige Schirmgehäuse wird die dritte Messvorrichtung von der ersten und zweiten Messvorrichtung elektromagnetisch mindestens teilweise abgeschirmt. Dies ermöglicht eine geringe Beeinflussung der dritten Messvorrichtung durch die erste und die zweite Messvorrichtung. Auf diese Weise kann die dritte Messvorrichtung beispielsweise unabhängig von einer zeitlichen Taktung der ersten und zweiten Messvorrichtung betrieben werden.

Insbesondere weist das Schirmgehäuse für die dritte Messvorrichtung einen geringen Metallanteil auf. Damit ist gemeint, das Schirmgehäuse an den für die elektromagnetische Abschirmung relevanten Stellen eine Metalldicke von maximal 1.5 Millimeter und minimal 0.5 Mikrometer aufweist. Die Metalldicke kann auch maximal 1 Millimeter und minimal 1 Mikrometer betragen. Insbesondere beträgt die Metalldicke maximal 0.5 Millimeter und minimal 2 Mikrometer.

Durch den geringen Metallanteil werden die erste und die zweite Messvorrichtung nur wenig beeinflusst, gleichzeitig aber die dritte Messvorrichtung dennoch elektromagnetisch von diesen abgeschirmt.

Optional umfasst der geringe Metallanteil des Schirmgehäuses nichtferromagnetisches Metall, insbesondere Aluminium. Auf diese Weise wird die Magnetfeldmessmethode nicht durch das Schirmgehäuse beeinflusst. Der Metallanteil des Schirmgehäuses kann auch Kupfer umfassen. Alternativ kann auch Edelstahl vom geringen Metallanteil umfasst sein.

Insbesondere kann der geringe Metallanteil durch Bedampfung auf das Schirmgehäuse aufgebracht werden.

Optional ist die dritte Messvorrichtung für eine Anwendung einer Impulsradarmethode als Bodenradarmethode ausgebildet.

Mit Impulsradarmethode werden Methoden bezeichnet, die Impulse aussenden und aufgrund der gemessenen Dauer bis zum Empfang der entsprechenden reflektierten Wellen eine Distanz messen können. Dies eignet sich gut für die Detektionsvorrichtung, um eine möglichst genaue Lageposition des Zielobjekts ermitteln zu können. Im Gegensatz zu einer Dauerradarmethode muss die Vorrichtung mit der Impulsradarmethode auch nicht bewegt werden, um ein relevantes Messresultat ermitteln zu können.

Optional ist die Impulsradarmethode eine Ultrabreitband-Pulsradannethode.

Die Ultrabreitband-Pulsradannethode (sogenannt UWB, also Ultra-Wide-Band) kann mit üblichen technischen Vorrichtungen in Echtzeit ausgewertet werden. Dies ist für andere Impulsradarmethoden aufgrund der anfallenden grossen Datenmenge aktuell noch schwierig.

Optional umfasst die dritte Messvorrichtung einen Radarsignalsender, welcher als Sendesignal einen Rechteckimpuls mit einer Impulsdauer von maximal 5 ns zu senden imstande ist.

Die Impulsdauer kann beispielsweise auch maximal 2.5 ns betragen. Insbesondere beträgt die Impulsdauer maximal 1 ns.

Der Rechteckimpuls mit der Impulsdauer von maximal wenigen ns hat den Vorteil, dass die empfangenen reflektierten Wellen aufgrund der veränderten Rechteckform gut erkennbar sind und die Veränderung der Rechteckform ausgewertet werden kann für eine höhere Auflösung.

Alternativ kann das Sendesignal auch eine andere Form als ein Rechteckimpuls aufweisen. Der Rechteckimpuls kann auch länger als maximal 5 ns dauern.

Optional umfasst die dritte Messvorrichtung eine Radarsignalsteuervorrichtung, welche einen Takt für Messzyklen von mindestens 1 Hz und höchstens 100 Hz für die dritte Messvorrichtung vorgibt.

Insbesondere gibt die Radarsignalsteuervorrichtung einen Takt von mindestens 1 Hz und höchstens 50 Hz vor. Die Radarsignalsteuervorrichtung kann einen Takt von mindestens 5 Hz und höchstens 25 Hz vorgeben.

Mit einem Messzyklus für die dritte Messvorrichtung ist gemeint, dass die Bodenradarmethode eine ganze Messung umfassend aussenden und empfangen elektromagnetischer Wellen abschliesst und wieder mit einer neuen Messung beginnt.

Optional umfasst die dritte Messvorrichtung als Radarsignalempfänger mindestens zwei parallel zueinander angeordnete Vivaldi-Antennen.

Vivaldi-Antennen ermöglichen einen Empfang eines breitbandigen Signals mit hoher Leistung. Auch ein Verhältnis zwischen Antennengewinn, Schirmbarkeit und Anpassung des Eingangsreflexionsfaktors ist im Vergleich mit anderen Antennentypen vorteilhaft für diese spezifische Verwendung in der Detektionsvorrichtung. Dadurch eignen sich Vivaldi-Antennen gut für eine Detektionsvorrichtung umfassend eine Radarmethode, die Objekte im Boden detektiert.

Insbesondere sind alle Vivaldi-Antennen aus nichtferromagnetischem Metall ausgebildet, beispielsweise aus Aluminium. Auf diese Weise wird die Magnetfeldmessmethode nicht beeinflusst, welche auf nichtferromagnetische Metalle unempfindlich ist.

Insbesondere werden mehrere parallel nebeneinander angeordnete Vivaldi-Antennen als Empfangsspulen verwendet. Dies erhöht eine Auflösung des Bodenradars. Beispielsweise werden mindestens drei Vivaldi-Antennen verwendet. Es können auch mindestens vier Vivaldi-Antennen verwendet werden.

Optional ist die zweite Messvorrichtung für eine Anwendung eines Pulsinduktionsverfahrens als Elektromagnetikmessmethode ausgebildet, wobei beim Pulsinduktionsverfahren eine Auswertung einer Abklingzeit eines Feedbackimpulses erfolgt.

Das Pulsinduktionsverfahrens mit der Auswertung der Abklingzeit des Feedbackimpulses unterscheidet sich von anderen Pulsinduktionsverfahren dadurch, dass die Abklingzeit des Feedbackimpulses ausgewertet wird anstelle einer Auswertung einer Spannung des Feedbackimpulses. Dies hat den Vorteil, dass die Messung weniger störanfällig ist. Das heisst, dass Störgrössen einen geringeren Einfluss auf die Messung haben. Durch die Auswertung der Abklingzeit wird, verglichen mit der Auswertung der Spannung, ein niedrigeres Signalrauschen bei höheren Sensitivität erzielt.

Optional weist die zweite Messvorrichtung mindestens eine Sendespule und mindestens eine Empfangsspule auf.

Insbesondere können mindestens zwei Empfangsspulen verwendet werden. Es können auch mindestens drei Empfangsspulen verwendet werden. Eine Verwendung von mehreren Empfangsspulen erhöht die Auflösung der Elektromagnetikmessmethode.

Insbesondere weist die zweite Messvorrichtung genau eine Sendespule auf.

Insbesondere ist in der zweiten Messvorrichtung jede Sendespule separat von der jeder Empfangsspule ausgebildet.

Optional umfasst die Detektionsvorrichtung eine Haltevorrichtung für eine kraft- und kontaktschlüssige Verbindung der Detektionsvorrichtung mit einem Fortbewegungsmittel. Dabei ist insbesondere die Haltevorrichtung an der Detektionsvorrichtung derart angeordnet, dass die Haltevorrichtung der zweiten Messvorrichtung näher liegt als der dritten Messvorrichtung und die Haltevorrichtung der zweiten Messvorrichtung näher liegt als der ersten Messvorrichtung.

Anders ausgedrückt ist die Haltevorrichtung bei der zweiten Messvorrichtung angeordnet, und die erste Messvorrichtung ist von der Haltevorrichtung entfernt angeordnet. Dies hat den Vorteil, dass ein Metallanteil des bei der Haltevorrichtung angeordneten Fortbewegungsmittels möglichst weit entfernt von der ersten Messvorrichtung angeordnet ist und dadurch dessen Beeinflussung der Magnetfeldmessungen gering gehalten werden kann. Durch die Haltevorrichtung kann die Detektionsvorrichtung an einem Fortbewegungsmittel befestigt und einfach, effizient und kontrolliert von einer Position in eine andere Position bewegt werden.

Das Fortbewegungsmittel kann ein Landfahrzeug sein. Das Fortbewegungsmittel kann ein Wasserfahrzeug sein, beispielsweise ein schwimmfähiges Bewegungsmittel wie ein Boot. Das Fortbewegungsmittel kann ein Luftkissenboot sein. Das Fortbewegungsmittel ist beispielsweise ein Luftfahrzeug bzw. Fluggerät. Das Fortbewegungsmittel kann unbemannt oder bemannt sein. Das Fortbewegungsmittel kann ferngesteuert sein. Das Fortbewegungsmittel kann auch autonom gesteuert sein.

Alternativ ist die Detektionsvorrichtung frei von einer Haltevorrichtung ausgebildet. Insbesondere umfasst die Detektionsvorrichtung eigene Mittel zur Fortbewegung.

Optional ist die Detektionsvorrichtung als Modul ausgebildet, welches mit einem oder mehreren weiteren Detektionsvorrichtungsmodulen verbinden lässt.

Durch die Ausbildung der Detektionsvorrichtung als Modul lassen sich die Messflächen aller dreier Messvorrichtungen der jeweiligen Module verbinden zu einer sich jeweils über mehrere Module erstreckende Messfläche. Durch die Ausbildung als Modul kann rasch und unkompliziert die Messfläche der Detektionsvorrichtung variiert und den lokalen Begebenheiten und der jeweiligen Anwendung angepasst werden. Beispielsweise kann die Messfläche für schmale Passagen wie in Wäldern klein gehalten werden. Für grosse freistehende Flächen kann die Messfläche vergrössert werden. Eine Anzahl Module kann auf eine Tragfähigkeit von Fortbewegungsmitteln angepasst werden.

Insbesondere weist eine als Modul ausgebildete Detektionsvorrichtung eine Messfläche einer Breite von mindestens 0.4 m und von maximal 2 m auf. Beispielsweise ist die Messfläche mindestens 0.7 m und maximal 1.7 m breit. Die Breite der Messfläche einer als Modul ausgebildeten Detektionsvorrichtung kann mindestens 1 m und maximal 1.4 m betragen.

Die Breite der Messfläche einer Messvorrichtung wird senkrecht zu einer Richtung gemessen, in welcher die drei Messvorrichtungen der Detektionsvorrichtung mindestens benachbart zueinander angeordnet sind. Anders ausgedrückt sind die Messflächen der Messvorrichtungen in Längsrichtung mindestens benachbart zueinander angeordnet. Die Messflächen der drei Messvorrichtungen wechseln sich also grob gesagt in Längsrichtung der Messflächen ab.

Optional weisen die Messflächen aller drei Messvorrichtungen im Wesentlichen dieselbe Breite auf.

Im Wesentlichen bedeutet dabei, dass die maximalen Breiten der Messflächen der drei Messvorrichtungen maximal 0.5 m voneinander abweichen. Insbesondere kann das bedeuten, dass sie maximal 0.3 m voneinander abweichen. Beispielsweise können die maximalen Breiten der Messflächen der drei Messvorrichtungen maximal um 0.1 m voneinander abweichen.

Ein Vorteil der im Wesentlichen gleich grossen Breite der Messflächen der drei Messvorrichtungen liegt darin, dass bei in Längsrichtung der Messflächen verschobenen Messungen die drei Messvorrichtungen im Wesentlichen dieselbe Breite der Bodenfläche erfassen, wodurch die Detektionsfläche entsprechend gross ist. Anders ausgedrückt wird auf diese Weise wenig oder gar keine Bodenfläche von lediglich einem Teil der Messvorrichtungen vermessen und somit nicht zur Detektionsfläche gezählt. Unnötige Messungen werden auf diese Weise vermieden und die Effizienz der Detektionsvorrichtung gesteigert.

Im Folgenden wird der Erfindungsgegenstand anhand eines bevorzugten Ausführungsbeispiels, welches in den beiliegenden Zeichnungen dargestellt ist, näher erläutert. Es zeigen jeweils schematisch:
- Figur 1: eine Detektionsvorrichtung von oben, mit schematisch eingezeichneten Messflächen der drei Messvorrichtungen;
- Figur 2: die Detektionsvorrichtung aus Figur 1 in einer Seitenansicht, mit schematisch eingezeichneten Messbereichen der drei Messvorrichtungen;
- Figur 3: die Detektionsvorrichtung aus Figur 1 von oben mit einer Haltevorrichtung;
- Figur 4: die Detektionsvorrichtung aus Figur 1 von oben mit Details der drei Messvorrichtungen;
- Figur 5: die Detektionsvorrichtung aus Figur 1 in einer Ansicht von oben, befestigt an einem Fortbewegungsmittel;
- Figur 6: die Detektionsvorrichtung mit Fortbewegungsmittel aus Figur 5 in einer Seitenansicht.

Grundsätzlich sind in den Figuren gleiche Teile mit gleichen Bezugszeichen versehen. Mit den Bezeichnungen links, rechts, unten und oben wird auf die Zeichnungsebene und Orientierung der Figuren Bezug genommen. Eine Nummerierung der Figur ist beispielsweise unten in der Mitte der Figur angeordnet.

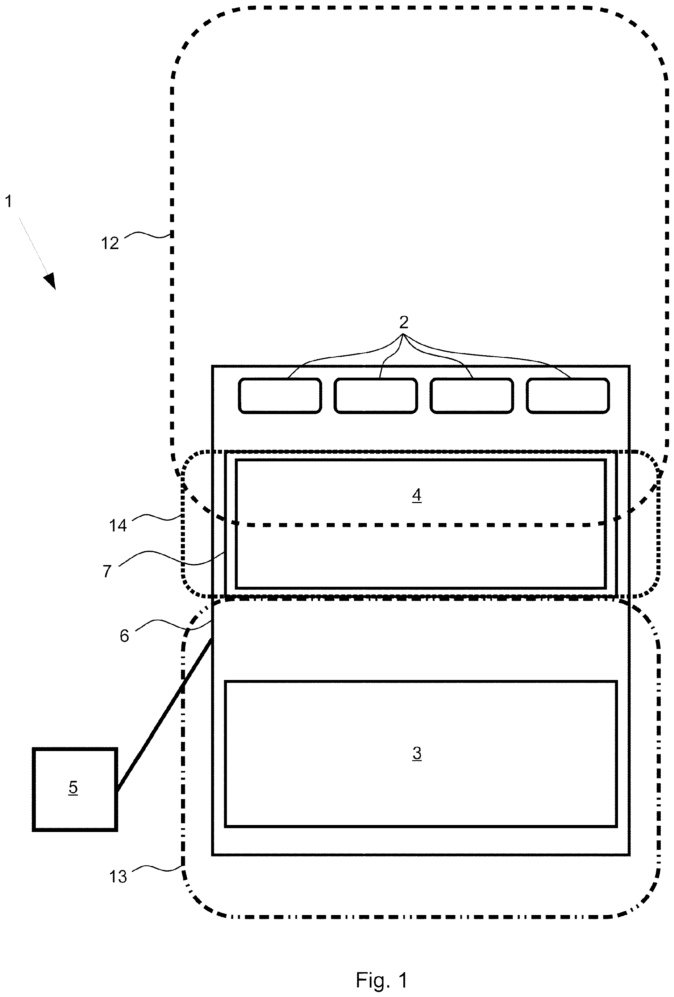

Figur 1 zeigt eine erfindungsgemässe Detektionsvorrichtung 1 von oben. In einem Vorrichtungsgehäuse 6 sind eine erste Messvorrichtung 2 für eine Magnetfeldmessmethode mit mindestens einem Gradiometer, eine zweite Messvorrichtung 3 für eine Elektromagnetikmessmethode aus dem Bereich time-domain-Verfahren und eine dritte Messvorrichtung 4 für eine Bodenradarmethode angeordnet. Eine von der Detektionsvorrichtung 1 umfasste Auswertungsvorrichtung 5 ist ausserhalb des Vorrichtungsgehäuses 6 angeordnet. Die erste Messvorrichtung 2 weist eine Messfläche 12 auf, welche mindestens benachbart angeordnet ist zu einer Messfläche 14 der dritten Messvorrichtung 4. In diesem Fall überschneidet sich ein unterer Teil der Messfläche 12 der ersten Messvorrichtung 2 mit rund einer Hälfte des oberen Teils der Messfläche 14 der dritten Messvorrichtung 4. Die Messfläche 14 der dritten Messvorrichtung 4 wiederum ist mindestens benachbart angeordnet zu einer Messfläche 13 der zweiten Messvorrichtung 3, im vorliegenden Fall angrenzend angeordnet: die Messfläche 14 der dritten Messvorrichtung 4 grenzt direkt an die Messfläche 13 der zweiten Messvorrichtung 3 an und ist oberhalb letzterer angeordnet. Die Messflächen 12, 13, 14 aller dreier Messvorrichtungen 2, 3, 4 erstrecken sich über die ganze Breite des Vorrichtungsgehäuses 6 und gehen ein bisschen darüber hinaus, genauer gesagt nach rechts und links gleich weit über das Vorrichtungsgehäuse 6 hinaus.

Die Auswertungsvorrichtung 5 ist ausserhalb des Vorrichtungsgehäuses 6 angeordnet, aber mit diesem per Kabel verbunden, um die Signale aller Messvorrichtungen 2, 3, 4 der Detektionsvorrichtung 1 empfangen zu können. Die Auswertung der Signale aller Messvorrichtungen 2, 3, 4 erfolgt in Echtzeit. Die Verbindung per Kabel und die Anordnung ausserhalb des Vorrichtungsgehäuses 6 erlauben eine effiziente Funktion der Auswertungsvorrichtung 5 mit einer möglichst geringen Störung der Messvorrichtungen 2, 3, 4.

Die erste Messvorrichtung 2 umfasst vier separate Elemente und ist am oberen Ende des Vorrichtungsgehäuses 6 angeordnet, um möglichst wenigen Störeinflüssen durch andere Komponenten der Detektionsvorrichtung 1 ausgesetzt zu sein. Unterhalb der ersten Messvorrichtung 2 ist die dritte Messvorrichtung 4 angeordnet. Die dritte Messvorrichtung 4 ist dabei teilweise von einem Schirmgehäuse 7 umgeben (in der Ebene von Figur 1 vollständig umgeben: gegen oben, unten, links und rechts). Durch das vollständig vom Vorrichtungsgehäuse 6 umfasste Schirmgehäuse 7 wird die dritte Messvorrichtung 4 sowohl von der ersten Messvorrichtung 2 als auch von der zweiten Messvorrichtung 3 bestmöglich elektromagnetisch abgeschirmt, um störende Einflüsse auf die erste Messvorrichtung 2 und die zweite Messvorrichtung 3 zu minimieren. Unterhalb der dritten Messvorrichtung 4 und dessen Schirmgehäuse 7 ist am unteren Ende des Vorrichtungsgehäuses 6 die zweite Messvorrichtung 3 angeordnet. Die dritte Messvorrichtung 4 befindet sich also zwischen der ersten Messvorrichtung 2 und der zweiten Messvorrichtung 3, was eine bewusste und für eine Messqualität der Messvorrichtungen 2, 3, 4 vorteilhafte räumliche Anordnung genau dieser drei Messvorrichtungen 2, 3, 4 darstellt. Das Schirmgehäuse 7 umgibt die dritte Messvorrichtung 4 in Figur 1 nicht nur von links und rechts, sondern auch von oben - aber nicht von unten.

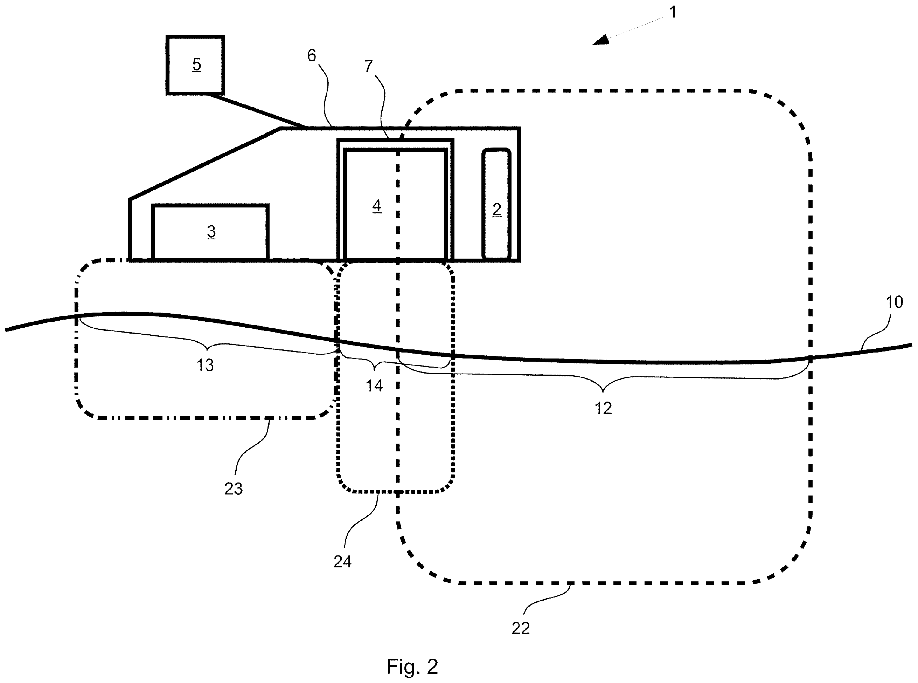

In Figur 2 ist dieselbe Detektionsvorrichtung 1 wie in Figur 1 gezeigt, aber diesmal in einer Seitenansicht. Es ist auch eine Bodenfläche 10 eingezeichnet, und Messbereiche 22, 23, 24 von allen drei Messvorrichtungen 2, 3, 4. Der Messbereich 23 der zweiten Messvorrichtung 3 und der Messbereich 24 der dritten Messvorrichtung 4 erstrecken sich nur unterhalb des Vorrichtungsgehäuses 6 nach unten zur Bodenfläche 10 und in selbige hinein. Dabei dringt der Messbereich 23 der zweiten Messvorrichtung 3 weniger weit unter die Bodenfläche 10 als der Messbereich 24 der dritten Messvorrichtung 4. Der Messbereich 22 der ersten Messvorrichtung 2 hingegen erstreckt sich nicht nur unterhalb des Vorrichtungsgehäuses 6 in Richtung Bodenfläche 10 und darunter (und dies weiter nach unten als diejenigen der beiden anderen Messvorrichtungen 3, 4). Sondern der Messbereich 22 der ersten Messvorrichtung 2 erstreckt sich auch ins Vorrichtungsgehäuse 6 hinein und sogar nach oben darüber hinaus.

Diejenigen Teile der Bodenfläche 10, welche sich mit den Messbereichen 22, 23, 24 der drei Messvorrichtungen 2, 3, 4 schneiden, sind die Messflächen 12, 13, 14 der jeweiligen Messvorrichtungen 2, 3, 4.

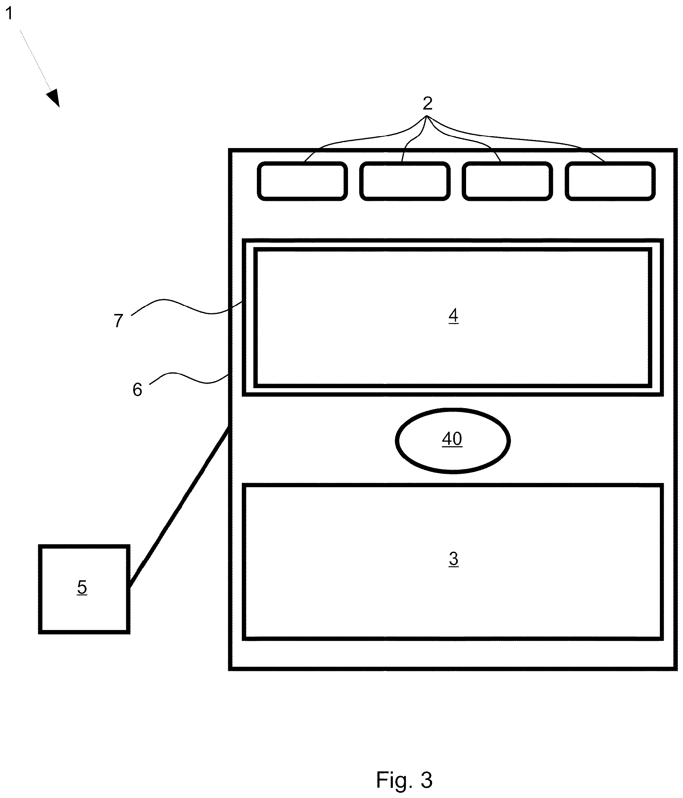

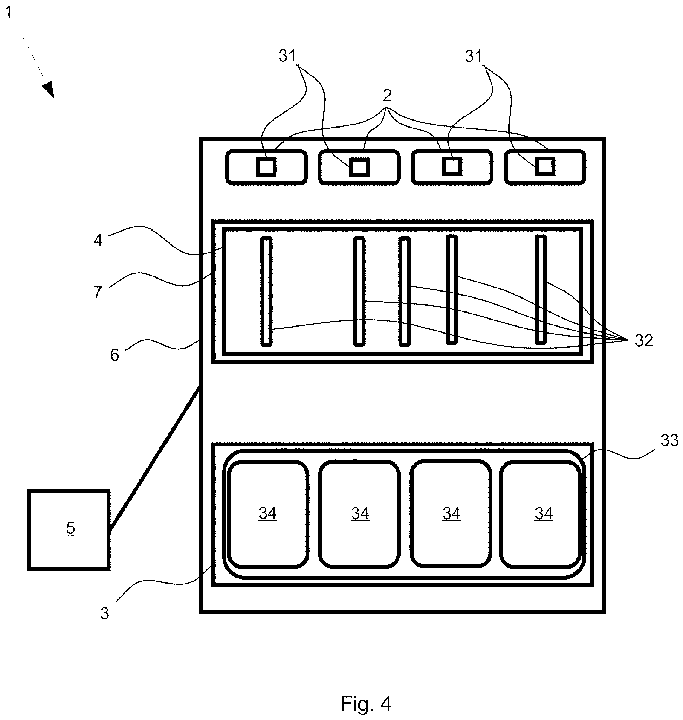

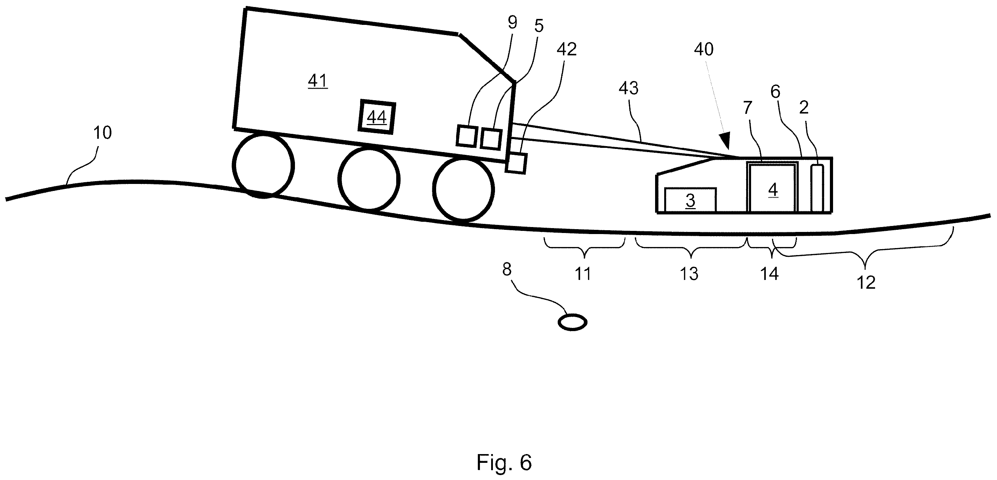

Figuren 3 und 4 zeigen die Detektionsvorrichtung 1 aus Figur 1, und zwar ebenfalls von oben. In Figur 3 ist eine Haltevorrichtung 40 eingezeichnet, welche einer Befestigung der Detektionsvorrichtung 1 bzw. genauer gesagt dessen Vorrichtungsgehäuses 6 an einem Fortbewegungsmittel 41 (in Figur 3 nicht eingezeichnet) dient. Dank des Fortbewegungsmittels 41 können die Detektionsvorrichtung 1 und damit die Messflächen 12, 13, 14 aller darin befindlichen Messvorrichtungen 2, 3, 4 bewegt werden. Auf diese Weise liegen Teile der Bodenfläche 10 zu verschiedenen Zeitpunkten in verschiedenen Messflächen 12, 13, 14. Eine Detektionsfläche 11 (siehe Figur 6) ist ein Teil der Bodenfläche 10, welcher schon in den Messflächen 12, 13, 14 aller dreier Messvorrichtungen 2, 3, 4 gelegen hat. Die Haltevorrichtung 40 ist zwischen zweiter Messvorrichtung 3 und dritter Messvorrichtung 4 angeordnet, somit ist die erste Messvorrichtung 2 weiter von der Haltevorrichtung 40 entfernt als die zweite Messvorrichtung 3 und als die dritte Messvorrichtung 4.

In Figur 4 wiederum werden Details der drei Messvorrichtungen 2, 3, 4 gezeigt. Die vier separaten Elemente der ersten Messvorrichtung 2 umfassen jeweils einen Fluxgatesensor 31. Innerhalb der dritten Messvorrichtung 4 sind fünf Vivaldiantennen 32 angeordnet, jeweils parallel zueinander und mit deren Längsachse (welche einem Dipol der Vivaldiantennen 32 entspricht) von unten nach oben ausgerichtet. Und in der zweiten Messvorrichtung 3 sind nebeneinander vier Empfangsspulen 34 angeordnet, welche von einer einzigen Sendespule 33 umfasst sind.

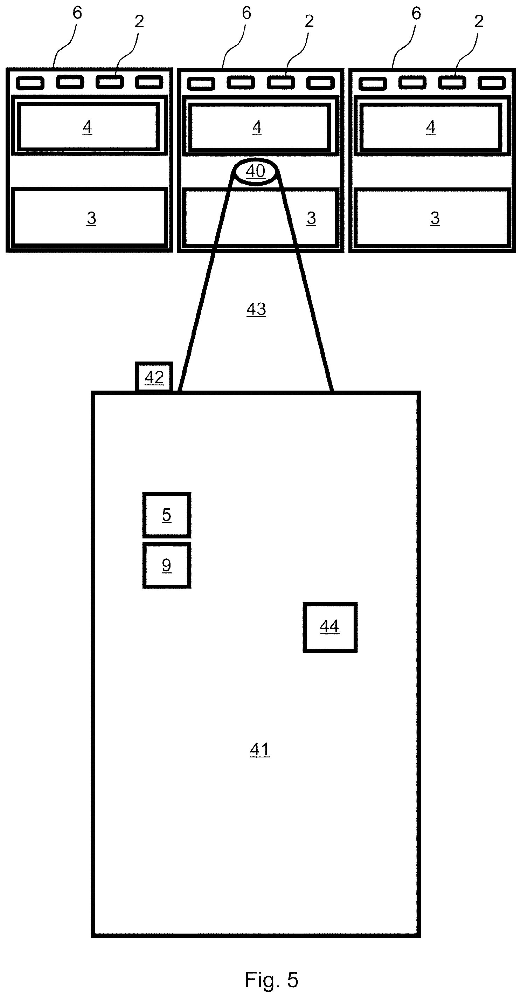

Figur 5 zeigt die Detektionsvorrichtung 1 aus Figur 1 ebenfalls von oben, aber diesmal befestigt am Fortbewegungsmittel 41. Zudem ist in Figur 5 eine modulare Ausbildung der Detektionsvorrichtung 1 ersichtlich: es können die Vorrichtungsgehäuse 6 von mehreren Detektionsvorrichtungen 1 nebeneinander angeordnet werden, um die Messflächen 12, 13, 14 aller dreier Messvorrichtungen 2, 3, 4 einer Detektionsvorrichtung 1 mit benachbarten Messflächen 12, 13 14 von benachbarten Detektionsvorrichtungen 1 zu entsprechend breiteren totalen Messflächen zu verbinden, welche sich über alle miteinander gekoppelten Vorrichtungsgehäuse 6 erstrecken. Im der vorliegenden Ausführungsform sind drei Detektionsvorrichtungen 1 miteinander kombiniert, indem jeweils links und rechts eines Vorrichtungsgehäuses 6 ein weiteres daran befestigt ist. Bei einer Breite eines Vorrichtungsgehäuses von 1.2 m ergibt sich eine totale Breite aller dreier Vorrichtungsgehäuse von 3.6 m und entsprechend breite totale Messflächen aller Messvorrichtungen 2, 3, 4. An der Haltevorrichtung 40 des mittleren Vorrichtungsgehäuse 6 werden die Vorrichtungsgehäuse 6 aller dreier Detektionsvorrichtungen 1 gehalten, um berührungsfrei und mit geringem Abstand zur Bodenfläche 10 positioniert zu werden. Die Auswertungsvorrichtung 5 ist imstande, die Signale aller Messvorrichtungen 2, 3, 4 aller dreier Detektionsvorrichtungen 1 in Echtzeit auszuwerten.

Das Fortbewegungsmittel 41 ist ein Landfahrzeug, welches einen Befestigungsarm 43 aufweist. Der Befestigungsarm 43 greift an der Haltevorrichtung 50 des Vorrichtungsgehäuses 6 der mittleren Detektionsvorrichtung 1 an. Durch den länglichen Befestigungsarm 43 sind die drei Vorrichtungsgehäuse 6 vom Fortbewegungsmittel 41 räumlich entfernt angeordnet, um die Messvorrichtungen 2, 3, 4 in den Vorrichtungsgehäusen 6 möglichst wenig zu beeinflussen. Die erste Messvorrichtung 2 ist dabei jeweils am weitesten weg vom Fortbewegungsmittel 41 angeordnet. Im Fortbewegungsmittel 41 angeordnet sind die Auswertungsvorrichtung 5 und darüber hinaus eine Steuervorrichtung 9 und eine Anzeigevorrichtung 44. Die Steuervorrichtung 9 steuert eine zeitliche Abfolge von Messvorgängen der ersten Messvorrichtung 2 und der zweiten Messvorrichtung 3 aller dreier Detektionsvorrichtungen, wobei ein Haupttakt für Messzyklen 111 Hz beträgt. Eine Messfrequenz für die dritte Messvorrichtung 4 beträgt 10 Hz. Und die Anzeigevorrichtung 44 stellt eine Lageinformation eines Zielobjekts 8 unterhalb der Detektionsfläche 11 graphisch dar. Darüber hinaus weist das Fortbewegungsmittel 41 eine Objektmarkierungsvorrichtung 42 auf, welche Markierungen auf der Bodenfläche 10 anzubringen erlaubt. Solche Markierungen können Stellen oder Bereiche der Bodenfläche 10 markieren, unter welchen sich ein Zielobjekt 8 befindet oder vermutet wird.

In Figur 6 ist die Detektionsvorrichtung 1 mit Fortbewegungsmittel 41 aus Figur 5 in einer Seitenansicht dargestellt. Dabei sind auch die Bodenfläche 10, ein darunter liegendes Zielobjekt 8 und die Detektionsfläche 11 dargestellt. Das Fortbewegungsmittel 41 bewegt sich im Anwendungsfall typischerweise nach rechts in Figur 6. Somit wird ein Teil der Bodenfläche 10 zuerst von der Messfläche 12 der ersten Messvorrichtung 2 erfasst, danach von der Messfläche 14 der dritten Messvorrichtung 4 und schlussendlich von der Messfläche 13 der zweiten Messvorrichtung 3. Sobald ein Teil der Bodenfläche 10 in allen Messflächen 12, 13, 14 aller dreier Messvorrichtungen 2, 3, 4 gelegen hat, wird er als Detektionsfläche 11 bezeichnet. Durch eine Kombination aller ausgewerteten Signale aller Messvorrichtungen 2, 3, 4 aller Detektionsvorrichtungen 1, welche in der Auswertungsvorrichtung 5 erfolgt, kann eine Lageinformation des Zielobjekts 8 unter der Detektionsfläche 11 ermittelt und in der Anzeigevorrichtung 44 graphisch dargestellt werden.

## Patentansprüche

1. Detektionsvorrichtung (1) zum Detektieren eines explosionsfähigen Zielobjekts (8), welches bis maximal 6 m tief unter einer Bodenfläche (10) angeordnet ist, umfassend eine erste Messvorrichtung (2) für eine Magnetfeldmessmethode mit mindestens einem Gradiometer, eine zweite Messvorrichtung (3) für eine Elektromagnetikmessmethode aus dem Bereich time-domain-Verfahren, eine dritte Messvorrichtung (4) für eine Bodenradarmethode, und eine Auswertungsvorrichtung (5), wobei eine Messfläche (12, 13, 14) von jeder Messvorrichtung (2, 3, 4) mindestens benachbart zu mindestens einer Messfläche (12, 13, 14) einer der beiden anderen Messvorrichtung (2, 3, 4) angeordnet ist, wobei die Auswertungsvorrichtung (5) Signale der ersten, zweiten und dritten Messvorrichtung (2, 3, 4) zu empfangen und jeweils in Echtzeit auszuwerten imstande ist, und die Auswertungsvorrichtung (5) aus einer Kombination der ausgewerteten Signale der ersten, zweiten und dritten Messvorrichtung (2, 3, 4) eine Lageinformation des Zielobjekts (8) unterhalb einer Detektionsfläche (11), welche in den Messflächen (12, 13, 14) aller dreier Messvorrichtungen (2, 3, 4) gelegen hat, zur Verfügung zu stellen imstande ist.

2. Detektionsvorrichtung (1) gemäss Anspruch 1, **dadurch gekennzeichnet, dass** die Detektionsvorrichtung (1) eine Steuervorrichtung (9) umfasst, welche eine zeitliche Abfolge von Messungen der ersten (2) und der zweiten (3) Messvorrichtung festlegt, wobei insbesondere die Steuervorrichtung (9) einen Haupttakt für Messzyklen von 1 Hz bis 10 kHz vorgibt.

3. Detektionsvorrichtung (1) gemäss Anspruch 1 oder 2, **dadurch gekennzeichnet, dass** die dritte Messvorrichtung (4) für die Bodenradarmethode räumlich zwischen der ersten Messvorrichtung (2) für die Magnetfeldmessmethode und der zweiten Messvorrichtung (3) für die Elektromagnetikmessmethode angeordnet ist, und insbesondere die erste Messvorrichtung (2) von der zweiten Messvorrichtung (3) in einem Abstand von mindestens 0.5 m angeordnet ist.

4. Detektionsvorrichtung (1) gemäss einem der Ansprüche 1 bis 3, **dadurch gekennzeichnet, dass** die dritte Messvorrichtung (4) für die Bodenradarmethode mindestens teilweise von einem metallhaltigen Schirmgehäuse (7) umfasst wird, welche die dritte Messvorrichtung (4) von der ersten Messvorrichtung (2) und von der zweiten Messvorrichtung (3) räumlich trennt und elektromagnetisch mindestens teilweise abschirmt.

5. Detektionsvorrichtung (1) gemäss einem der Ansprüche 1 bis 4, **dadurch gekennzeichnet, dass** die dritte Messvorrichtung (4) für eine Anwendung einer Impulsradarmethode als Bodenradarmethode ausgebildet ist.

6. Detektionsvorrichtung (1) gemäss Anspruch 5, **dadurch gekennzeichnet, dass** die dritte Messvorrichtung (4) einen Radarsignalsender umfasst, welcher als Sendesignal einen Rechteckimpuls mit einer Impulsdauer von maximal 5 ns zu senden imstande ist.

7. Detektionsvorrichtung (1) gemäss einem der Ansprüche 1 bis 6, **dadurch gekennzeichnet, dass** die dritte Messvorrichtung (4) als Radarsignalempfänger mindestens zwei parallel zueinander angeordnete Vivaldi-Antennen (32) umfasst.

8. Detektionsvorrichtung (1) gemäss einem der Ansprüche 1 bis 7, **dadurch gekennzeichnet, dass** die zweite Messvorrichtung (3) für eine Anwendung eines Pulsinduktionsverfahrens als Elektromagnetikmessmethode ausgebildet ist, wobei beim Pulsinduktionsverfahren eine Auswertung einer Abklingzeit des Feedbackimpulses erfolgt.

9. Detektionsvorrichtung (1) gemäss Anspruch 8, **dadurch gekennzeichnet, dass** die zweite Messvorrichtung (3) mindestens eine Sendespule (33) und mindestens 3 Empfangsspulen (34) aufweist.

10. Detektionsvorrichtung (1) gemäss einem der Ansprüche 1 bis 9, **dadurch gekennzeichnet, dass** die Detektionsvorrichtung (1) eine Haltevorrichtung (40) für eine kraft- und kontaktschlüssige Verbindung der Detektionsvorrichtung (1) mit einem Fortbewegungsmittel (41) umfasst, wobei insbesondere die Haltevorrichtung (40) an der Detektionsvorrichtung (1) derart angeordnet ist, dass die Haltevorrichtung (40) der zweiten Messvorrichtung (3) näher liegt als der dritten Messvorrichtung (4) und die Haltevorrichtung (40) der zweiten Messvorrichtung (3) näher liegt als der ersten Messvorrichtung (2).

## Claims

1. A detection device (1) for detecting an explosive target object (8) which is arranged up to maximally 6 m deep below a ground surface (10), comprising a first measuring device (2) for a magnetic field measuring method with at least one gradiometer, a second measuring device (3) for an electromagnetic measuring method from the field of time-domain methods, a third measuring device (4) for a ground radar method and an evaluation device (5), wherein a measurement surface (12, 13, 14) of each measuring device (2, 3, 4) is arranged at least adjacently to at least one measurement surface (12, 13, 14) of one of the two other measuring devices (2, 3, 4), wherein the evaluation device (5) is capable of receiving signals of the first, second and third measuring device (2, 3, 4) and of evaluating them each in real-time, and the evaluation device (5) is capable of providing position information of the target object (8) below a detection surface (11) which was situated in the measurement surfaces (12, 13, 1, 4) of all three measuring devices (2, 3, 4), from a combination of the evaluated signals of the first, second and third measuring device (2, 3, 4).

2. A detection device (1) according to claim 1, **characterised in that** the detection device (1) comprises a control device (9) which sets a temporal sequence of measurements of the first (2) and of the second (3) measuring device, wherein in particular the control device (9) sets a main cycle for measuring cycles of 1 Hz to 10 kHz.

3. A detection device (1) according to claim 1 or 2, **characterised in that** the third measuring device (4) for the ground radar method is arranged spatially between the first measuring device (2) for the magnetic field measuring method and the second measuring device (3) for the electromagnetic measuring method, and in particular the first measuring device (2) is arranged at a distance of at least 0.5 m from the second measuring device (3).

4. A detection device (1) according to one of the claims 1 to 3, **characterised in that** the third measuring device (4) for the ground radar method is encompassed at least partly by a metal-containing shielding housing (7) which spatially separates the third measuring device (4) from the first measuring device (2) and from the second measuring device (3) and electromagnetically shields it at least partly.

5. A detection device (1) according to one of the claims 1 to 4, characterised that the third measuring device (4) is designed for an application of an impulse radar method as a ground radar method.

6. A detection device (1) according to claim 5, **characterised in that** the third measuring device (4) comprises a radar signal emitter which is capable of emitting a rectangular impulse with an impulse duration of maximal 5 ns as an emitting signal.

7. A detection device (1) according to one of the claims 1 to 6, **characterised in that** the third measuring device (4) as a radar signal receiver comprises at least two Vivaldi antennae (32) which are arranged parallel to one another.

8. A detection device (1) according to one of the claims 1 to 7, **characterised in that** the second measuring device (3) is designed for an application of a pulse induction method as an electromagnetic measuring method, wherein with regard to the pulse induction method an evaluation of an attenuation time of the feedback impulse is effected.

9. A detection device (1) according to claim 8, **characterised in that** the second measuring device (3) comprises at least one emitting coil (33) and at least 3 receiving coils (34).

10. A detection device (1) according to one of the claims 1 to 9, **characterised in that** the detection device (1) comprises a holding device (40) for a non-positive and contact-fit connection of the detection device (1) to a transport means (41), wherein in particular the holding device (40) is arranged on the detection device (1) in a manner such that the holding device (40) is closer to the second measuring device (3) than to the third measuring device (4), and the holding device (40) is closer to the second measuring device (3) than to the first measuring device (2).

## Revendications

1. Dispositif de détection (1) pour détecter un objet cible explosible (8) qui est disposé jusqu'à une profondeur maximale de 6 m sous une surface du sol (10), comprenant un premier dispositif de mesure (2) pour une méthode de mesure de champ magnétique avec au moins un gradiomètre, un deuxième dispositif de mesure (3) pour une méthode de mesure électromagnétique du domaine des procédés dans le domaine temporel, un troisième dispositif de mesure (4) pour une méthode de radar de sol, et un dispositif d'évaluation (5), une surface de mesure (12, 13, 14) de chaque dispositif de mesure (2, 3, 4) étant disposée au moins adjacente à au moins une surface de mesure (12, 13, 14) de l'un des deux autres dispositifs de mesure (2, 3, 4), le dispositif d'évaluation (5) étant apte à recevoir et à évaluer respectivement en temps réel des signaux du premier, du deuxième et du troisième dispositif de mesure (2, 3, 4), et le dispositif d'évaluation (5) étant apte à fournir, à partir d'une combinaison des signaux évalués du premier, du deuxième et du troisième dispositif de mesure (2, 3, 4), une information de position de l'objet cible (8) en dessous d'une surface de détection (11) qui était située à l'intérieur des surfaces de mesure (12, 13, 14) de toutes les trois dispositifs de mesure (2, 3, 4).

2. Dispositif de détection (1) selon la revendication 1, **caractérisé en ce que** le dispositif de détection (1) comprend un dispositif de commande (9) qui définit une séquence temporelle de mesures du premier (2) et du deuxième (3) dispositif de mesure, le dispositif de commande (9) imposant en particulier une cadence principale pour des cycles de mesure de 1 Hz à 10 kHz.

3. Dispositif de détection (1) selon la revendication 1 ou 2, **caractérisé en ce que** le troisième dispositif de mesure (4) pour la méthode de radar de sol est disposé spatialement entre le premier dispositif de mesure (2) pour la méthode de mesure de champ magnétique et le deuxième dispositif de mesure (3) pour la méthode de mesure électromagnétique, et en particulier le premier dispositif de mesure (2) est disposé à une distance d'au moins 0,5 m du deuxième dispositif de mesure (3).

4. Dispositif de détection (1) selon l'une des revendications 1 à 3, **caractérisé en ce que** le troisième dispositif de mesure (4) pour la méthode de radar de sol est au moins partiellement entouré d'un boîtier de blindage (7) contenant du métal qui sépare spatialement le troisième dispositif de mesure (4) du premier dispositif de mesure (2) et du deuxième dispositif de mesure (3) et le blinde électromagnétiquement au moins partiellement.

5. Dispositif de détection (1) selon l'une des revendications 1 à 4, **caractérisé en ce que** le troisième dispositif de mesure (4) est conçu pour une application d'une méthode de radar à impulsions en tant que méthode de radar de sol.

6. Dispositif de détection (1) selon la revendication 5, **caractérisé en ce que** le troisième dispositif de mesure (4) comprend un émetteur de signal radar qui est apte à émettre comme signal d'émission une impulsion rectangulaire d'une durée d'impulsion de 5 ns au maximum.

7. Dispositif de détection (1) selon l'une des revendications 1 à 6, **caractérisé en ce que** le troisième dispositif de mesure (4) comprend, en tant que récepteur de signal radar, au moins deux antennes Vivaldi (32) disposées parallèlement l'une à l'autre.

8. Dispositif de détection (1) selon l'une des revendications 1 à 7, **caractérisé en ce que** le deuxième dispositif de mesure (3) est conçu pour une application d'un procédé d'induction d'impulsions en tant que méthode de mesure électromagnétique, une évaluation d'un temps de décroissance de l'impulsion de rétroaction étant effectuée lors du procédé d'induction d'impulsions.

9. Dispositif de détection (1) selon la revendication 8, **caractérisé en ce que** le deuxième dispositif de mesure (3) présente au moins une bobine d'émission (33) et au moins 3 bobines de réception (34).

10. Dispositif de détection (1) selon l'une des revendications 1 à 9, **caractérisé en ce que** le dispositif de détection (1) comprend un dispositif de maintien (40) pour une liaison par adhérence et par contact du dispositif de détection (1) à un moyen de locomotion (41), le dispositif de maintien (40) étant en particulier disposé sur le dispositif de détection (1) de telle sorte que le dispositif de maintien (40) est plus proche du deuxième dispositif de mesure (3) que du troisième dispositif de mesure (4) et que le dispositif de maintien (40) est plus proche du deuxième dispositif de mesure (3) que du premier dispositif de mesure (2).
